# EUROPÄISCHE PATENTSCHRIFT

(11) **EP 3 705 766 B1**
(45) Veröffentlichungstag und Bekanntmachung des Hinweises auf die Patenterteilung: **28.12.2022**
(21) Anmeldenummer: 20160725.6
(22) Anmeldetag: 03.03.2020
(51) Int. Cl.: F16L 13/02

(54) **VERFAHREN ZUM VERBINDEN DER ENDEN VON INNENBESCHICHTETEN STAHLROHREN**
METHOD FOR CONNECTING COATED STEEL PIPE ENDS
MÉTHODE DE RACCORDEMENT D'EXTRÉMITÉS DE TUYAUX EN ACIER

(30) Priorität: 04.03.2019 DE 102019105367
(43) Veröffentlichungstag der Anmeldung: 09.09.2020
(73) Patentinhaber: Mannesmann Line Pipe GmbH, 57074 Siegen (DE)
(72) Erfinder: SÖKER, Marcus, 47259 Duisburg (DE); WEIL, Christoph, 47259 Duisburg (DE)
(74) Vertreter: Meissner, Peter E.

(56) Entgegenhaltungen:
- WO-A1-2020/053511
- US-A- 3 453 004
- US-A1- 2014 252 757

## Beschreibung

Die Erfindung betrifft ein Verfahren zum Verbinden der Enden von innenbeschichteten Stahlrohren gemäß dem Patentanspruch 1. Weiterbildungen sind in Unteransprüchen angegeben.

Die Innenbeschichtungen der Stahlrohre können metallisch, zum Beispiel als Zinkbeschichtung oder nichtmetallisch zum Beispiel aus Kunststoff oder Keramik ausgebildet sein. Nachfolgend werden nur Stahlrohre mit einer nichtmetallischen Innenbeschichtung betrachtet.

Rohrleitungen aus zusammengeschweißten Rohren werden zum Beispiel für Trink- und Abwasser sowie für den Transport aggressiver Medien eingesetzt. Sie sind meist außen mit einer nichtmetallischen, dreischichtigen Kunststoffbeschichtung gegen Korrosion geschützt. Rohrleitungen mit nichtmetallischen Innenbeschichtungen aus Kunststoff oder Keramik werden zum Beispiel beim Transport aggressiver Medien in der öl- und gasfördernden Industrie im Onshore- und Offshore-Bereich eingesetzt. Bekannte Beschichtungen aus Kunststoff bestehen zum Beispiel aus Polyurethan, Polyethylen, Epoxidharz, oder Polyamid. In der betrieblichen Fertigung werden die mit einer nichtmetallischen Innenbeschichtung versehenen Rohre, dort wo später die Rohre Stoß an Stoß auf der Baustelle zu einer Rohrleitung zusammengeschweißt werden, entweder von der Beschichtung freigehalten, um eine einwandfreie Verschweißung sicherzustellen oder die Rohre werden komplett mit einer Innenbeschichtung versehen, die vor dem Zusammenschweißen auf der Baustelle im Schweißnahtbereich wieder durch einen Rückschnitt entfernt, bzw. beim Zusammenschweißen thermisch beschädigt wird. Hierdurch soll neben einer einwandfreien Verschweißung der Rohrenden auch eine Beschädigung der Beschichtung durch den Wärmeeintrag beim Schweißen vermieden werden.

Nach dem Zusammenschweißen der Rohre müssen die von der Beschichtung freigehaltenen Verbindungsbereiche zur Erfüllung der Anforderungen an den Korrosionsschutz wieder mit einer entsprechenden Beschichtung nachbeschichtet werden, was einen erheblichen Aufwand erfordert und im Inneren einer Rohrleitung oftmals nicht möglich ist.

Zur Lösung dieser Problematik ist zum Beispiel aus der Offenlegungsschrift DD 291 495 A5 ein Verfahren zum Verbinden der Enden von innenbeschichteten Stahlrohren bekannt, bei dem zunächst an vorbereitete unbeschichtete Rohre ein mindestens 10 cm langes Rohrstück aus korrosionsbeständigem Stahl angeschweißt wird.

Danach werden die Rohre innen beschichtet, wobei die Beschichtung 2 bis 3 cm über die Schweißnaht zwischen Rohr und angeschweißtem Rohrstück gezogen wird. Beim Zusammenbau beziehungsweise bei der Verlegung der Rohre, werden dann die nicht mitbeschichteten Rohrenden aus korrosionsbeständigem Stahl miteinander verschweißt, ohne dass die Beschichtung durch Wärmeeinfluss beschädigt wird.

Nachteilig ist hierbei, dass je nach Durchmesser der Rohleitung entsprechende Rohrstücke aus korrosionsbeständigem Material vorgehalten werden müssen und das Anschweißen eines derartigen Flansches sehr aufwändig und damit kostenintensiv ist. Zudem müssen die Rohrenden aus korrosionsbeständigem Material so ausgelegt sein, dass sie den Belastungen während des Betriebes der Leitung (in der Regel Innendruck) standhalten. Hierdurch wird mehr Material eingesetzt, als für den reinen Korrosionsschutz erforderlich ist.

Ein weiteres Verfahren zum Verbinden der Enden von Stahlrohren ist aus der US 3 453 004 A bekannt.

Aufgabe der Erfindung ist es, ein alternatives Verfahren zum Verbinden der Enden von Stahlrohren mit einer nichtmetallischen Innenbeschichtung anzugeben, welches kostengünstiger und einfacher in der Durchführung ist.

Des Weiteren soll eine Stahlrohrleitung aus den so verschweißten Rohren angegeben werden.

Erfindungsgemäß bietet ein Verfahren nach Anspruch 1 eine wirtschaftlichere und einfachere Möglichkeit, innenbeschichtete Rohre zur einer Rohrleitung miteinander zu verbinden. Gegenüber dem Stand der Technik wird der Aufwand zur Herstellung einer Rohrverbindung an innenbeschichteten Stahlrohren erheblich reduziert, da kein zur jeweiligen Rohrabmessung passendes Rohrstück aus korrosionsbeständigem Stahl zum Anschweißen an die Rohrenden benötigt wird, sondern es wird der Korrosionsschutz im Schweißnahtbereich der Innenbeschichtung über eine einfache Auskleidung der Innenwand an den Rohrenden realisiert. Somit kann unabhängig vom Rohrdurchmesser auf einfache Weise der Korrosionsschutz bei innenbeschichteten Rohren im Schweißnahtbereich der Rohrenden sichergestellt werden.

Das Auskleiden der Rohrenden selbst kann erfindungsgemäß zum Beispiel mittels einer thermischen, chemischen, elektrochemischen, physikalisch-chemischen oder mechanischen Plattierung erfolgen.

Als günstig für einen Kompromiss zwischen Korrosionsschutz im Schweißnahtbereich und Wirtschaftlichkeit hat sich erwiesen, wenn sich die Auskleidung in Rohrlängsrichtung, ausgehend vom Rohrende, über eine Länge von mindestens 5 mm erstreckt. Die Länge der Auskleidung richtet sich nach der Größe des Schweißnahtbereiches, die wiederum abhängig ist vom eingesetzten Schweißverfahren und der in die zu verschweißenden Rohrenden eingebrachte Streckenenergie. Die Länge der Auskleidung am Rohrende kann somit auch zum Beispiel 10 mm, 20 mm, 30 mm oder mehr betragen.

In einer ersten vorteilhaften Ausgestaltung der Erfindung, erfolgt das Auskleiden mittels thermischem Plattieren. Die Plattierung selbst kann vorteilhaft eine Auftragsschweißung, Löten oder ein thermisches Spritzen beinhalten.

Die Auftragsschweißung kann erfindungsgemäß zum Beispiel mittels Elektroschlackeschweißen, Unterpulverschweißen, Laserstrahlschweißen, Plasmaschweißen oder Metallschutzgasschweißen erfolgen. Aber auch andere Verfahren, wie zum Beispiel Hybridschweißverfahren, mit denen eine flächige Auftragsschweißung erreicht wird, können eingesetzt werden. Es können sowohl Band-, als auch Drahtelektroden verwendet werden.

In einer Ausgestaltung der Erfindung wird die Auftragsschweißung vorteilhaft teil- oder vollmechanisiert/automatisiert durchgeführt aber auch ein manuelles Auftragsschweißen ist möglich.

Die Auftragsschweißungen können dabei mittels Stabelektrode, WIG-Schweißen, Gasschweißen, Plasmaschweißen (mit Pulver, Heißdraht) sowie Reibschweißen und Widerstandspressschweißen durchgeführt werden.

Wird erfindungsgemäß ein thermisches Spritzen zur Herstellung der Auskleidung eingesetzt, kann dies zum Beispiel ein Flammspritzen, ein Plasmaspritzen, ein Laserspritzen oder ein Lichtbogenspritzen sein, aber auch andere hier nicht genannte Spritzverfahren sind für den Einsatzzweck denkbar.

Die Auskleidung der Rohrenden kann aber auch mittels chemischer, elektrochemischer oder physikalisch-chemischer Plattierung erfolgen. Beispielhaft seien hier die stromlose Metallabscheidung, kathodische Abscheidung oder PVD-Beschichtung genannt.

Alternativ kann das Auskleiden erfindungsgemäß auch durch eine mechanische Plattierung erfolgen, zum Beispiel durch Einsetzen eines Rohrringes in das Rohrende, wobei der Rohrring kraft- oder stoffschlüssig mit dem Rohr verbunden wird.

Die kraftschlüssige Verbindung des Rohrrings mit dem Rohrende kann dabei vorteilhaft mittels Einschrumpfen, Einsprengen, Einpressen, Eindrücken oder Einrollen erfolgen.

Die stoffschlüssige Verbindung des Rohrrings mit dem Rohrende erfolgt vorteilhaft mittels Verschweißen.

Der Rohrstahl kann je nach Anforderungen an die Festigkeit aus einem un- oder niedriglegierter Baustahl, wie zum Beispiel einem Grade B, X42, X52, X60, X65, X70, X80, X100 bestehen und die Plattierung je nach Anforderungen an die Korrosionseigenschaften zum Beispiel ein hochlegierter Cr-, CrNi-, CrNiMo- Stahl oder ein Ni-Basiswerkstoff sein.

Bei hohen Anforderungen an die Verschleißfestigkeit kann auch zum Beispiel ein Kohlenstoffstahl zur Anwendung kommen.

Entsprechend den Anforderungen an die Korrosions- und/oder Verschleißbeständigkeit kann die nichtmetallische Innenbeschichtung der Rohre zum Beispiel aus Polyurethan, Polyethylen, Epoxidharz, Polyamid oder einer keramischen Beschichtung bestehen.

Weiterhin sieht die Erfindung strömungstechnisch vorteilhaft vor, dass die Auskleidung mindestens mit einer Dicke aufgebracht wird, die der Dicke der nachträglich aufgebrachten Innenbeschichtung entspricht und anschließend auf eine exakte vorgegebene Dicke, die der Dicke der Beschichtung entspricht, wieder mechanisch abgearbeitet wird. Dies sichert einen gleichmäßigen, strömungsgünstigen Übergang zur Innenbeschichtung.

Ebenso wird die Innenbeschichtung im Uberdeckungsbereich mit der Auskleidung mechanisch wieder auf die Dicke der Innenbeschichtung abgearbeitet. Auf diese Weise kann die Dicke im Überdeckungsbereich ebenfalls ideal an die vorgesehene Dicke der Kunststoff Innenbeschichtung angepasst werden, ohne dass es zu einer Überhöhung im Überdeckungsbereich kommt, die den Stofffluss des transportierten Mediums im Betrieb der Rohrleitung stören würde.

Der Überdeckungsbereich von Plattierung und Innenbeschichtung wird erfindungsgemäß großzügig bemessen, um eine etwaige Unterwanderung der Beschichtung durch ein zu transportierendes korrosiven Medium in das Stahlrohr auszuschließen. Als günstig haben sich Überdeckungslängen von mindestens 3 mm herausgestellt. Je nach Länge der Auskleidung kann die Überdeckungslänge auch vorteilhaft 5 mm, 10 mm, 20 mm oder mehr betragen, um einen optimalen Schutz vor Unterwanderung der Beschichtung zu erreichen.

In einer weiteren vorteilhaften Ausgestaltung der Erfindung ist vorgesehen, dass die mit der Innenbeschichtung in Kontakt stehende Oberfläche der Plattierung im Überdeckungsbereich mit einer die mechanische Verklammerung mit der Innenbeschichtung verbessernden Oberflächenstruktur versehen wird. Neben einem anzustrebenden Stoffschluss von Plattierung und überdeckender Innenbeschichtung wird hiermit zusätzlich ein mechanischer Verbund der Schichten realisiert, der insbesondere beim Transport abrasiver Medien Vorteile bietet. Erfindungsgemäß wird deshalb zur Verbesserung der mechanischen Verklammerung, die Rauigkeit zum Beispiel durch eine mechanische Oberflächenbehandlung erhöht. Erfindungsgemäß wird ebenfalls eine Rohrleitung aus Stahl mit einer nichtmetallischen Innenbeschichtung bereitgestellt, bestehend aus miteinander verschweißten Einzelrohren, deren zu verschweißenden Endbereiche im Schweißnahtbereich von der Beschichtung befreit sind und das Rohrende im Bereich der Schweißnaht der Rohrverbindung mit einem korrosionsträgen Metall verbunden ist und die Beschichtung das korrosionsträge Metall unter Aussparung des Schweißnahtbereiches der Rohrenden überdeckt, welche dadurch gekennzeichnet ist, dass das korrosionsträge Metall als Auskleidung auf die Innenseiten mindestens im Schweißnahtbereich der Rohrenden aufgebracht ist.

Insbesondere ist hierbei vorteilhaft vorgesehen, dass die Innenseiten der Rohrenden mindestens im Schweißnahtbereich der Rohrverbindung eine thermisch aufgebrachte Plattierung aus korrosionsträgen und verschleißfestem Metall als Auskleidung aufweisen.

Auch wird eine Rohrleitung bereitgestellt, wobei die Rohrenden nach den oben beschriebenen Verfahrensschritten vorbereitet und anschließend verschweißt worden sind.

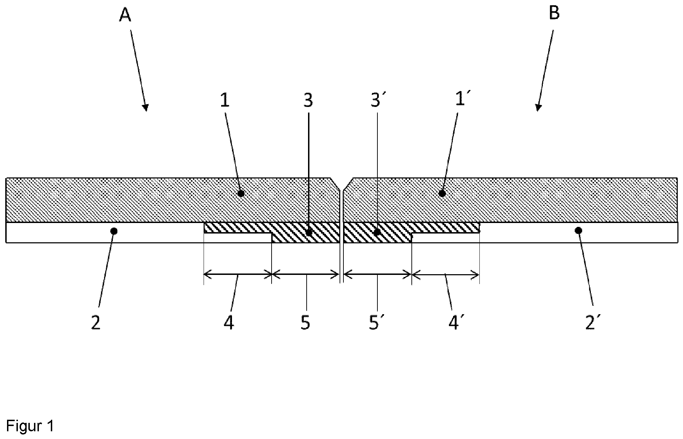

Anhand der Figur 1 wird die Erfindung nachfolgend näher erläutert.

Dargestellt sind die Enden zweier Rohre A, B, die miteinander verschweißt werden sollen. Die Rohre A, B bestehen aus jeweils einem Stahlrohr 1,1', die mit einer nichtmetallischen Innenbeschichtung 2,2' und einer an der Innenoberfläche der Rohrenden aufgebrachten korrosionsträgen Plattierung 3,3' versehen sind. Die Innenbeschichtung 2,2' weist einen Überlappungsbereich 4,4' mit der Plattierung 3,3' auf, wobei der Schweißnahtbereich 5,5' der Rohrverbindung ausgespart bleibt, um eine Beeinträchtigung der Beschichtung durch die eingebrachte Wärme beim Schweißen zu vermeiden. Im Überdeckungsbereich 4,4' ist die Plattierung 3,3' mechanisch auf ein Maß abgearbeitet, dass die hierauf aufgebrachte Beschichtung keinen Überstand zur Plattierung 3,3' im Schweißnahtbereich 5,5' aufweist. Zum Verschweißen der Enden der Rohre A, B sind diese mit einer Schweißfase 6 als Nahtvorbereitung versehen.

Hier nicht dargestellt ist, dass die mit der Innenbeschichtung 2,2' in Kontakt stehende Oberfläche der Plattierung 3,3' im Überdeckungsbereich 4,4' mit einer die mechanische Verklammerung mit der Innenbeschichtung verbessernden Oberflächenstruktur versehen ist, bei der die Rauigkeit erhöht wurde.

**Bezugszeichenliste**

| **Nr.** | **Bezeichnung** |
|---|---|
| A, B | Rohre |
| 1,1' | Stahl rohre |
| 2,2' | Innenbeschichtung |
| 3,3' | Auskleidung bzw. Plattierung |
| 4,4' | Überdeckungsbereich |
| 5,5' | Schweißnahtbereich |
| 6 | Schweißfase |

## Patentansprüche

1. Verfahren zum Verschweißen der Enden von mit einer nichtmetallischen Beschichtung versehenen innenbeschichteten Stahlrohren (1,1'), bei dem die Rohrenden vor dem Aufbringen der Innenbeschichtung (2,2') in die Rohre, im Bereich (5,5') der Schweißnaht der Rohrverbindung mit einem korrosionsträgen Metall (3,3') verbunden werden, anschließend die Innenbeschichtung (2,2') in der Weise aufgebracht wird, dass die Beschichtung das korrosionsträge Metall unter Aussparung des Schweißnahtbereiches der Rohrenden überdeckt und anschließend die Enden der Stahlrohre verschweißt werden, wobei das korrosionsträge Metall (3,3') vor der Verschweißung der Rohrenden, als Auskleidung bzw. Plattierung auf die Innenseiten der Rohrenden, mindestens im Schweißnahtbereich (5,5') aufgebracht wird, wobei die Auskleidung der Rohrenden mindestens mit einer Dicke aufgebracht wird, die der Dicke der nachträglich aufgebrachten Innenbeschichtung (2,2') entspricht, **dadurch gekennzeichnet, dass** die Auskleidung bzw. Plattierung (3,3') mechanisch wieder auf die Dicke der Innenbeschichtung (2,2') abgearbeitet wird.

2. Verfahren nach Anspruch 1,
**dadurch gekennzeichnet,**
**dass** das Auskleiden der Rohrenden mittels einer thermischen, chemischen, elektrochemischen, physikalisch-chemischen oder mechanischen Plattierung (3,3') erfolgt.

3. Verfahren nach Anspruch 1 oder 2,
**dadurch gekennzeichnet,**
**dass** die Auskleidung sich in Rohrlängsrichtung, ausgehend vom Rohrende, über mindestens 5 mm erstreckt.

4. Verfahren nach Anspruch 2,
**dadurch gekennzeichnet,**
**dass** die mechanische Plattierung (3,3') durch Einsetzen eines Rohrringes in das Rohrende erfolgt.

5. Verfahren nach Anspruch 4,
**dadurch gekennzeichnet,**
**dass** der Rohrring kraft- oder stoffschlüssig mit dem Rohr verbunden wird.

6. Verfahren nach Anspruch 5,
**dadurch gekennzeichnet,**
**dass** die kraftschlüssige Verbindung des Rohrrings mit dem Rohrende mittels Einschrumpfen, Einpressen, Eindrücken oder Einrollen erfolgt.

7. Verfahren nach Anspruch 5,
**dadurch gekennzeichnet,**
**dass** die stoffschlüssige Verbindung des Rohrrings mit dem Rohrende mittels Verschweißen erfolgt.

8. Verfahren nach Anspruch 2,
**dadurch gekennzeichnet,**
**dass** das thermische Plattieren eine Auftragsschweißung oder ein thermisches Spritzen ist.

9. Verfahren nach Anspruch 8,
**dadurch gekennzeichnet,**
**dass** die Auftragsschweißung mittels Elektroschlackeschweißen, Unterpulverschweißen, Laserstrahlschweißen, Plasmaschweißen, Lichtbogenhandschweißen oder Metallschutzgasschweißen erfolgt.

10. Verfahren nach Anspruch 8,
**dadurch gekennzeichnet,**
**dass** das thermische Spritzen ein Flammspritzen, Plasmaspritzen, Laserspritzen oder ein Lichtbogenspritzen ist.

11. Verfahren nach mindestens einem der Ansprüche 1 bis 10,
**dadurch gekennzeichnet,**
**dass** der Rohrstahl ein un- oder niedriglegierter Baustahl und die Plattierung ein hochlegierter korrosionsträger Cr-, CrNi- Stahl oder ein Ni-Basiswerkstoff ist.

12. Verfahren nach mindestens einem der Ansprüche 1 bis 11,
**dadurch gekennzeichnet,**
**dass** die Innenbeschichtung der Rohre aus Kunststoff oder Keramik besteht.

13. Verfahren nach Anspruch 12,
**dadurch gekennzeichnet,**
**dass** die Kunststoffbeschichtung aus Polyurethan, Polyethylen, Epoxidharz oder Polyamid besteht.

14. Verfahren nach mindestens einem der Ansprüche 1 bis 13,
**dadurch gekennzeichnet,**
**dass** die mit der Innenbeschichtung in Kontakt stehende Oberfläche der Auskleidung im Überdeckungsbereich mit einer die mechanische Verklammerung mit der Innenbeschichtung verbessernden Oberflächenstruktur versehen wird.

15. Verfahren nach Anspruch 14,
**dadurch gekennzeichnet,**
**dass** zur Verbesserung der mechanischen Verklammerung die Rauigkeit erhöht wird.

16. Verfahren nach Anspruch 14 oder 15,
**dadurch gekennzeichnet,**
**dass** die Innenbeschichtung mit einer Überdeckungslänge von mindestens 3 mm auf die Auskleidung aufgebracht wird.

## Claims

1. Method for welding the ends of internally coated steel tubes (1, 1') provided with a non-metal coating, in which method the tube ends are connected, in the region (5, 5') of the weld seam of the tube connection, to a corrosion-inert metal (3, 3') prior to the application of the inner coating (2, 2') in the tubes, then the inner coating (2, 2') is applied in such a way that the coating covers the corrosion-inert metal, with the exception of the weld seam region of the tube ends, and then the ends of the steel tubes are welded, the corrosion-inert metal (3, 3') being applied, before the welding of the tube ends, as lining or plating onto the insides of the tube ends, at least in the weld seam region (5, 5'), the lining of the tube ends being applied at least with a thickness corresponding to the thickness of the subsequently applied inner coating (2, 2'), **characterized in that** the lining or plating (3, 3') is mechanically processed again to the thickness of the inner coating (2, 2').

2. Method according to claim 1,
**characterized**
**in that** the tube ends are lined by means of a thermal, chemical, electrochemical, physical-chemical or mechanical plating (3,3').

3. Method according to either claim 1 or claim 2,
**characterized**
**in that** the lining extends over at least 5 mm in the longitudinal direction of the tube, starting from the tube end.

4. Method according to claim 2,
**characterized**
**in that** the mechanical plating (3.3') is carried out by inserting a tube ring into the tube end.

5. Method according to claim 4,
**characterized**
**in that** the tube ring is connected to the tube in a force-fitting or integral manner.

6. Method according to claim 5,
**characterized**
**in that** the force-fitting connection of the tube ring to the tube end is carried out by means of shrinking, press-fitting, impressing or rolling.

7. Method according to claim 5,
**characterized**
**in that** the integral connection of the tube ring to the tube end is carried out by means of welding.

8. Method according to claim 2,
**characterized**
**in that** the thermal plating is deposit welding or thermal spraying.

9. Method according to claim 8,
**characterized**
**in that** the deposit welding is carried out by means of electroslag welding, sub-arc welding, laser beam welding, plasma welding, arc welding or metal inert-gas welding.

10. Method according to claim 8,
**characterized**
**in that** the thermal spraying is flame spraying, plasma spraying, laser spraying or arc spraying.

11. Method according to at least one of claims 1 to 10,
**characterized**
**in that** the tubular steel is an unalloyed or low-alloy structural steel and the plating is a high-alloy corrosion-inert Cr or CrNi steel or an Ni base material.

12. Method according to at least one of claims 1 to 11,
**characterized**
**in that** the inner coating of the tubes consists of plastics material or ceramic.

13. Method according to claim 12,
**characterized**
**in that** the plastics coating consists of polyurethane, polyethylene, epoxy resin or polyamide.

14. Method according to at least one of claims 1 to 13,
**characterized**
**in that** the surface of the lining in contact with the inner coating in the overlap region is provided with a surface structure improving the mechanical interlocking with the inner coating.

15. Method according to claim 14,
**characterized**
**in that** the roughness is increased in order to improve the mechanical interlocking.

16. Method according to either claim 14 or claim 15,
**characterized**
**in that** the inner coating is applied to the lining with an overlap length of at least 3 mm.

## Revendications

1. Procédé de soudage des extrémités de tubes en acier (1, 1') revêtus intérieurement pourvus d'un revêtement non-métallique, pour lequel les extrémités de tube sont reliées avant l'application du revêtement intérieur (2, 2') dans les tubes, dans la zone (5, 5') du cordon de soudure de la liaison tubulaire avec un métal (3, 3') à corrosion différée, le revêtement intérieur (2, 2') est ensuite appliqué de telle manière que le revêtement recouvre le métal à corrosion différée en évidant la zone du cordon de soudure des extrémités de tube et les extrémités des tubes en acier soient ensuite soudées,
dans lequel le métal à corrosion différée (3, 3') est appliqué avant la soudure des extrémités de tube, comme garnissage ou placage sur les côtés intérieurs des extrémités de tube, au moins dans la zone du cordon de soudure (5, 5'), dans lequel le garnissage des extrémités de tube est appliqué au moins avec une épaisseur qui correspond à l'épaisseur du revêtement intérieur (2, 2') appliqué ultérieurement, **caractérisé en ce que** le garnissage ou le placage (3, 3') est enlevé mécaniquement de nouveau sur l'épaisseur du revêtement intérieur (2, 2').

2. Procédé selon la revendication 1,
**caractérisé en ce que**
le garnissage des extrémités de tube est effectué au moyen d'un placage (3, 3') thermique, chimique, électrochimique, physico-chimique ou mécanique.

3. Procédé selon la revendication 1 ou 2,
**caractérisé en ce que**
le garnissage s'étend dans le sens longitudinal de tube, à partir de l'extrémité de tube, sur au moins 5 mm.

4. Procédé selon la revendication 2,
**caractérisé en ce que**
le placage mécanique (3, 3') est effectué par insertion d'un anneau de tube dans l'extrémité de tube.

5. Procédé selon la revendication 4,
**caractérisé en ce que**
l'anneau de tube est relié à force ou par matière au tube.

6. Procédé selon la revendication 5,
**caractérisé en ce que**
la liaison à force de l'anneau de tube avec l'extrémité de tube est effectuée par rétrécissement, pressage, enfoncement ou calandrage.

7. Procédé selon la revendication 5,
**caractérisé en ce que**
la liaison par matière de l'anneau de tube avec l'extrémité de tube est effectuée par soudage.

8. Procédé selon la revendication 2,
**caractérisé en ce que**
le placage thermique est un soudage par application ou une projection thermique.

9. Procédé selon la revendication 8,
**caractérisé en ce que**
le soudage par application est effectué par soudage électrique, soudage à l'arc sous flux poudreux, soudage au laser, soudage au plasma, soudage manuel à l'arc ou soudage à l'arc sous protection gazeuse avec métal d'apport.

10. Procédé selon la revendication 8,
**caractérisé en ce que**
la projection thermique est une projection à la flamme, projection au plasma, projection au laser ou une projection à l'arc.

11. Procédé selon au moins l'une quelconque des revendications 1 à 10,
**caractérisé en ce que**
l'acier de tube est un acier de construction non-allié ou faiblement allié et le placage est un acier Cr, CrNi hautement allié, à corrosion différée ou un matériau à base de Ni.

12. Procédé selon au moins l'une quelconque des revendications 1 à 11,
**caractérisé en ce que**
le revêtement intérieur des tubes se compose de matière plastique ou de céramique.

13. Procédé selon la revendication 12,
**caractérisé en ce que**
le revêtement de matière plastique se compose de polyuréthane, polyéthylène, résine époxy ou polyamide.

14. Procédé selon au moins l'une quelconque des revendications 1 à 13,
**caractérisé en ce que**
la surface se trouvant en contact avec le revêtement intérieur du garnissage dans la zone de recouvrement est pourvue d'une structure de surface améliorant le cramponnage mécanique avec le revêtement intérieur.

15. Procédé selon la revendication 14,
**caractérisé en ce que**
la rugosité est augmentée pour l'amélioration du cramponnage mécanique.

16. Procédé selon la revendication 14 ou 15,
**caractérisé en ce que**
le revêtement intérieur est appliqué avec une longueur de recouvrement d'au moins 3 mm sur le garnissage.
